# EUROPÄISCHE PATENTANMELDUNG

(11) **EP 4 835 445 A1**
(43) Veröffentlichungstag der Anmeldung: **04.11.2026**
(21) Anmeldenummer: 25173371.3
(22) Anmeldetag: 29.04.2025
(51) Int. Cl.: G01N 21/17, G01N 21/3504, G01N 21/359

(54) **UNBEMANNTES METHANMESS-LUFTFAHRZEUG UND DAMIT DURCHFÜHRBARES MESSVERFAHREN**

(71) Anmelder: Schütz GmbH Messtechnik, 77933 Lahr (DE)
(72) Erfinder: Heimburger, Volker, 77933 Lahr (DE)
(74) Vertreter: mepat Patentanwälte

(57) **Zusammenfassung**

Die vorliegende Erfindung stellt ein unbemanntes Methanmess-Luftfahrzeug (1), eine Verwendung des Methanmess-Luftfahrzeugs (1) und ein Verfahren zur Durchführung einer Messung von Methan im Freien aus Quellen, die unter der Erdoberfläche liegen, mit dem unbemannten Methanmess-Luftfahrzeug (1) bereit. Das Methanmess-Luftfahrzeug (1) weist zumindest eine ansaugende photoakustische Methanmessvorrichtung (2) und zumindest eine laserbasierte Methanmessvorrichtung (3) auf, die alternierend oder gleichzeitig zur Durchführung von Messungen von Methan betätigbar sind.

## Beschreibung

Die Erfindung betrifft ein unbemanntes Methanmess-Luftfahrzeug zur Messung von Methan aus Quellen, die unter der Erdoberfläche liegen, und ein mit diesem unbemannten Methanmess-Luftfahrzeug durchführbares Messverfahren zur Messung von Methan aus ebendiesen Quellen.

Aus dem Stand der Technik ist es bekannt, aus unter der Erde liegenden Quellen austretendes Methan zu messen, etwa aus erdverlegten Methan-Hochdruckleitungen oder sonstigen unerwünschten Methanaustritten aus gasführenden Leitungen, die unterirdisch verlegt sind und durch freies Gelände verlaufen. Zur Überprüfung von Gasleitungen, die unter Wegen und Straßen und folglich unter gut befahrbarem Terrain verlegt sind, beschreibt die DE 39 24 337 eine geeignete Vorrichtung und das damit durchführbare Verfahren. Auch aus EP 4 024 022 A1 ist ein Gasmessfahrzeug bekannt.

Die Messung von Methan im Freien setzt hier voraus, dass der Boden, unter dem etwa eine Methangas führende Leitung verläuft, befahrbar ist. Misst man Methan mit den aus dem Stand der Technik bekannten Mitteln aus der Luft, so scheitern diese bisher, weil bei einer entsprechenden Bewuchsdichte in Vegetations-Hochphasen, wie sie etwa ein Maisfeld bietet, die Messung nicht oder nicht zuverlässig, auch nicht aus der Luft, möglich ist. Wenn die Quelle des austretenden Methans aber unter nicht befahrbarem Terrain liegt, werden bis dato unter anderem Drohnen als "unbemanntes Gasmess-Luftfahrzeug" eingesetzt. Die Ferndetektion, etwa mittels Infrarot Laser an der Drohne, ermöglicht aber nur eine sehr eingeschränkte Messbarkeit von austretendem Methan wegen des Pflanzenbewuchses.

Ausgehend von diesem Stand der Technik ist es Aufgabe der vorliegenden Erfindung, eine verbesserte Methanmessvorrichtung zur Messung von Methan aus Quellen, die unter der Erdoberfläche liegen, bereitzustellen.

Diese Aufgabe wird durch ein unbemanntes Methanmess-Luftfahrzeug mit den Merkmalen des Anspruchs 1 gelöst.

Die weitere Aufgabe zur Schaffung eines verbesserten Messverfahrens für Methan im Freien aus Quellen, die unter der Erdoberfläche liegen, wird durch die Verwendung der Vorrichtung mit den Merkmalen des unabhängigen Anspruchs 7 und durch das Verfahren unter Verwendung des unbemannten Methanmess-Luftfahrzeugs mit den Merkmalen des unabhängigen Anspruchs 8 gelöst.

Weiterbildungen der Vorrichtung, der Verwendung und des Verfahrens sind in den jeweiligen Unteransprüchen ausgeführt.

Gemäß einer ersten Ausführungsform des unbemannten Methanmess-Luftfahrzeugs ist dieses zur Messung von Methan im Freien aus Quellen, die unter der Erdoberfläche liegen ausgebildet. Das Methanmess-Luftfahrzeug ist zumindest mit einer ansaugenden photoakustischen Methanmessvorrichtung und einer laserbasierten Methanmessvorrichtung, die ein Laserspektrometer aufweist, ausgestattet. Dabei können die photoakustische Methanmessvorrichtung und die laserbasierte Methanmessvorrichtung alternierend, also abwechselnd, oder gleichzeitig zur Durchführung von Messungen von Methan betätigt werden.

Als "Methanmess-Luftfahrzeug" kann jedes fernbedienbare oder autonom steuerbare unbemannte Fluggerät ausgestattet werden, wie z. B. eine Drohne, oder ein Flugzeug in Modellgröße, das für den bodennahen Flug in einer Flughöhe in einem Bereich von unmittelbar über dem Boden bis 100 m geeignet ist.

"Messung von Methan" meint hierin das Erfassen des Gases Methan aus allen denkbaren Methanemissionsquellen natürlicher und nicht-natürlicher Art. Das Überfliegen von im Boden verlegten Leitungen ist dabei ebenso umfasst wie das Erfassen von Methan etwa beim Vorbeiflug an Behältern.

"Im Freien" meint hierin stets ein Gelände, das mit einem unbemannten Methanmess-Luftfahrzeug überflogen werden kann.

"Quellen, die unter der Erdoberfläche liegen" meint hierin gasführende Leitungen, Rohre, Behälter oder gasführende Ventile, die vom Erdboden überdeckt sind und damit einer direkten Messung oft nicht zugänglich sind.

Vorteilhaft wird es mit dem erfindungsgemäßen Methanmess-Luftfahrzeug ermöglicht, mit einem einzigen Gerät unterschiedlichen Messaufgaben nachzukommen und dabei zwischen einer Ferndetektion mittels Laser und einer extraktiven "Nahfeld"-Detektion auszuwählen. Durch die Kombination der zwei Methanmessvorrichtungen, die auf unterschiedlichen Messprinzipien basieren, wird eine hohe Messsicherheit bei der Messung von Methan ermöglicht. Zum einen direkt in Bodennähe und zum anderen in der Luft, wodurch bspw. vegetationsunabhängig eine ganzjährige Rohrnetzprüfung möglich ist. Situationsangepasst kann die geeignetere Vorrichtung ausgewählt werden, beide Methanmessvorrichtungen können dabei abwechselnd oder gleichzeitig eingesetzt werden.

Vorteilhaft kann mit dem erfindungsgemäßen Methanmess-Luftfahrzeug auch der Zeitraum, in dem eine Rohrnetzüberprüfung möglich ist, entzerrt werden. Im Vergleich zu Messungen mit Vorrichtungen im Stand der Technik können auch mehr Kilometer an Methanleitungen geprüft werden. Ferner kann die im Stand der Technik bisher bekannte Messmethodik mit Landfahrzeugen oder durch das Ablaufen des Rohrnetzes mit Sensoren etc. durch die Nutzung des erfindungsgemäßen Methanmess-Luftfahrzeugs ergänzt werden.

Gemäß einer weiteren Ausführungsform des erfindungsgemäßen Methanmess-Luftfahrzeugs ist das Methanmess-Luftfahrzeug mit zumindest einer Vorrichtung zur Steuerung der Flughöhe sowie mit einer Vorrichtung zur Bestimmung der Flughöhe und mit einer Vorrichtung zur Bestimmung einer Flugbahn und zur Ermittlung von flugbahnrelevanten und/oder messungsrelevanten Störobjekten operativ gekoppelt. "Störobjekte" meint hierin jede Art von Hindernis, das entweder dem Luftfahrzeug in seiner Flugbahn oder den Methanmessvorrichtungen im Wege steht oder die Methanmessvorrichtungen bei ihrer Messung behindert. Dies können Mauern, Maisfelder oder Vegetation anderer Art wie Gestrüpp oder Baumgruppen sein.

"Flugbahnrelevant" bezieht sich auf die Art der Störobjekte, die in der Flugbahn des Luftfahrzeugs auftreten können, wie z. B. Gebäude, Zäune oder Mauern. "Messungsrelevant" bezieht sich ebenfalls auf die Art der Störobjekte. Dabei sind "messungsrelevante Störobjekte" solche, die die Entscheidung notwendig machen, welche Messmethode, photoakustisch oder laserbasiert, verwendet werden soll.

Unter einer "Vorrichtung zur Steuerung einer Flughöhe" wird jede Art von Auftriebsausgleich oder Verwendung von Höhenrudern verstanden, der durch ein Steuergerät gesteuert werden kann (dynamischer Auftrieb, Helikopterrotoren, Höhenruder, etc.). Eine "Vorrichtung zur Bestimmung einer Flugbahn" beinhaltet u. a. ein dafür geeignetes Steuergerät, das Flugdaten generieren und verarbeiten kann.

Das Methanmess-Luftfahrzeug ist mit einer Datenverarbeitungseinheit ausgestattet, die als Steuergerät für das Luftfahrzeug selbst, für die Vorrichtung zur Bestimmung einer Flugbahn sowie die Vorrichtung zur Steuerung einer Flughöhe dienen kann. Solche Datenverarbeitungseinheiten sind an sich dem Fachmann bekannt. Die Datenverarbeitungseinheit des Methanmess-Luftfahrzeugs kann in einer autonomen Ausführungsform des Methanmess-Luftfahrzeugs alle Bestimmungen selbst vornehmen, so auch die Auswahl der Methanmessvorrichtung. Alternativ ist es auch möglich, dass die Datenverarbeitungseinheit des Methanmess-Luftfahrzeugs nur eine Steuereinheit ist, die die Befehle einer externen Datenverarbeitungseinheit umsetzt, die als fernbedienende Einheit fungiert.

Ferner weist das erfindungsgemäße Methanmess-Luftfahrzeug gemäß noch einer weiteren Ausführungsform ein Kamerasystem bzw. ein Sensorsystem auf. Eine Kamera oder eine vergleichbare Sensorik ermöglicht eine bildgesteuerte Erkennung des Geländes und dessen Topologie, inklusive Vegetationsbewuchs, das überflogen wird. Die Erkennung von bspw. Vegetation kann somit auch direkt an dem Methanmess-Luftfahrzeug erfolgen, so dass das Luftfahrzeug autonom agieren kann.

Das erfindungsgemäße Methanmess-Luftfahrzeug kann gemäß noch einer weiteren Ausführungsform durch eine fernbedienbare Vorrichtung manuell betätigt werden. Alternativ kann auch vorgesehen sein, dass das erfindungsgemäße Methanmess-Luftfahrzeug autonom betätigt werden kann.

Gemäß noch einer weiteren Ausführungsform des erfindungsgemäßen Methanmess-Luftfahrzeugs weist die laserbasierte Methanmessvorrichtung ein NIR-Laserspektrometer, ausgebildet zur Ferndetektion von Methangas, auf. Diese Art der Laserspektrometer arbeiten in einem Spektralbereich von ca. 785 nm bis 1700 nm und sind in ihrer Funktionsweise bekannt. Die Flughöhe des erfindungsgemäßen Methanmess-Luftfahrzeugs für die laserbasierte Methanmessvorrichtung kann in einem Bereich von 1 m bis 60 m, bevorzugt in einem Bereich von 5 m bis 25 m, besonders bevorzugt in einem Bereich von 5 m bis 10 m liegen. Mittels des NIR-Lasers kann auf Grund guter diffuser Rückreflexion in diesen Höhenbereichen Methankonzentration in Bodennähe bei guter Messauflösung gemessen werden.

Die ansaugende photoakustische Methanmessvorrichtung weist gemäß noch einer weiteren Ausführungsform des erfindungsgemäßen Methanmess-Luftfahrzeugs eine Messzelle auf. Die Messzelle weist eine Zuführleitung, eine Abführleitung und eine Pumpe auf, mit der Methangas aus einer Umgebung des Methanmess-Luftfahrzeugs im Freien in die Messzelle gefördert und abgefördert werden kann. Ferner sind die Zu- und Abführleitung der photoakustischen Methanmessvorrichtung durch eine gemeinsame Leitung ausgebildet. Mit der photoakustischen Methanmessvorrichtung kann unabhängig von der Bodenoberfläche eine hohe Messsicherheit erreicht werden. Die photoakustische Messzelle hat einen Schallaufnehmer, der dazu ausgebildet ist, ausschließlich eine von dem in die photoakustische Messzelle einströmenden und darin mittels einer Lichtemissionseinheit angeregten Methan emittierten akustischen Frequenz zu erfassen, und wobei der Schallaufnehmer mit einer Datenverarbeitungsvorrichtung operativ gekoppelt ist, um die erfasste Frequenz zu verarbeiten. Der Nachweis von Methan, qualitativ wie auch quantitativ, mittels Photoakustik ist an sich bekannt und beruht darauf, dass bei Bestrahlung von Methan in einer Messzelle mittels gepulster Lichtquelle die Moleküle Licht absorbieren und eine Erwärmung des Methans erfolgt, was wiederum in einem finiten Volumen der Zelle zu Ausdehnung und damit zu akustischen Wellen führt. Die Frequenz dieser Schallwellen stimmt mit der Modulationsfrequenz des Lichtemitters überein und die Schallwellen (Schallsignale) können mit Schallwandlern als Detektoren detektiert werden. Die Amplitude des Schallsignals korreliert wiederum mit der Absorptionsstärke, so dass auf diese Weise die Methankonzentration in der photoakustischen Messzelle bestimmt werden kann.

Vorteilhaft ergänzen sich die laserbasierte und die photoakustische Methanmessvorrichtung: Sollte die Intensität der Rückreflexion bspw. in Bodennähe nicht ausreichen, wird nicht die laserbasierte Methanmessvorrichtung verwendet, sondern die photoakustische Methanmessvorrichtung. Je nachdem, welche Flughöhe gewählt wird, wird die Entscheidung, ob die eine oder die andere Methanmessvorrichtung verwendet wird, in Abhängigkeit des Umfelds bestimmt. In einer weiteren Ausführungsform des erfindungsgemäßen Methanmess-Luftfahrzeugs können beide Methanmessvorrichtungen gleichzeitig betrieben werden, so dass bei Ausfall einer Methanmessvorrichtung die jeweils andere Methanmessvorrichtung ausgewertet werden kann.

Gemäß noch einer weiteren Ausführungsform des erfindungsgemäßen Methanmess-Luftfahrzeugs bildet ein Probenahmerohr, bevorzugt ein schwenkbar an der Messzelle angeordnetes Probenahmerohr, die Zuführleitung. Ist das Probenahmerohr in einer weiteren Ausführungsform des erfindungsgemäßen Methanmess-Luftfahrzeugs fest an dem Luftfahrzeug angeordnet, wird die Positionierung des Probennahmerohrs durch das Luftfahrzeug übernommen und Lage sowie Ort der Probennahme dadurch bestimmt.

Die Erfindung betrifft ferner die Verwendung eines erfindungsgemäßen Methanmess-Luftfahrzeugs zur Durchführung einer Messung von Methan im Freien aus Quellen, die unter der Erdoberfläche liegen.

Ein erfindungsgemäßes Verfahren zur Durchführung einer Messung von Methan im Freien aus Quellen, die unter der Erdoberfläche liegen, unter Verwendung eines erfindungsgemäßen Methanmess-Luftfahrzeugs, umfasst die folgenden Schritte:
- in Gang Setzen des Methanmess-Luftfahrzeugs und alternierend oder gleichzeitig Betätigen der photoakustischen Methanmessvorrichtung und der laserbasierten Methanmessvorrichtung,
- dabei Durchführen von Messungen von Methan.

Das erfindungsgemäße Verfahren ermöglicht durch die Auswahl der Messmethode eine effiziente Prüfung gerade in schwierigem Gelände, wodurch Zeit eingespart werden kann und mehr Prüfungen über das Jahr verteilt möglich werden, da das Verfahren nicht auf die vegetationsfreie Jahreszeit beschränkt ist. Lecks können damit schneller entdeckt und notwendige Reparaturen durchgeführt werden, so dass weniger vermeidbare Erdgasemissionen in die Atmosphäre gegeben werden.

Um vor allem die Geländebeschaffenheit in die Auswahl der Methanmessmethode einzubeziehen, kann das erfindungsgemäße Verfahren in einer weiteren Ausführungsform auch die folgenden Schritte umfassen:
- das in Gang Setzen des Methanmess-Luftfahrzeugs und in Gang Setzen der Vorrichtung zur Bestimmung einer Flugbahn und zur Ermittlung von Störobjekten,
- aus den hieraus ermittelten Daten Bestimmen der Flughöhe und
   bei Ermittlung von messungsrelevanten und flugbahnrelevanten Störobjekten Auswählen aus der Gruppe umfassend die ansaugende photoakustische Methanmessvorrichtung und die laserbasierte Methanmessvorrichtung, die ein Laserspektrometer aufweist, und
- alternierend oder gleichzeitig Betätigen der photoakustischen Methanmessvorrichtung und der laserbasierten Methanmessvorrichtung, und
- daraus Erhalten der Methanmesswerte entlang der Flugbahn.

Die Auswahl, ob die photoakustische Methanmessvorrichtung, die laserbasierte Methanmessvorrichtung oder beide Methanmessvorrichtungen Messen sollen, kann damit auf der Ermittlung der messungsrelevanten und flugbahnrelevanten Störobjekte fußen. Diese Ermittlung umfasst das Erkennen von Störobjekten und kann manuell erfolgen oder autonom. So wird das Methanmess-Luftfahrzeug bspw. von einem Bediener über ein Gelände ohne Vegetation gesteuert, hier wählt der Bediener die laserbasierte Methanmessvorrichtung aus. Sieht er dagegen auf dem zu überfliegenden Gelände bspw. ein Maisfeld, wird er dies als messungsrelevantes und flugbahnrelevantes Störobjekt erkennen und er kann auf die photoakustische Messvorrichtung wechseln. In einer alternativen Ausführungsform des erfindungsgemäßen Verfahrens kann diese Entscheidung von einer Datenverarbeitungseinheit in dem Luftfahrzeug getroffen werden. Dazu wird das Gelände mittels einer Kamera abgescannt und stets auf Störobjekte überprüft. Dafür können bspw. Formen oder Signaturen bestimmter Störobjekte (Bäume, Feldvegetation, etc.) in einer Datenbank der Datenverarbeitungseinheit gespeichert sein (extern oder intern in dem Methanmess-Luftfahrzeug).

Nach noch einer weiteren Ausführungsform des erfindungsgemäßen Verfahrens werden zu dem Schritt, ob messungsrelevante und flugbahnrelevante Störobjekte vorliegen, Vegetationsbestimmungsdaten verwendet. Diese könnten bspw. als vorgegebene Topologien oder bereits zuvor durchgeführte Flüge vorbestimmt bzw. vorgegeben werden, so dass eine Bestimmung der Störobjekte über Kl oder ein selbstlernendes System für Gelände, die immer wieder überflogen bzw. abgescannt werden müssen, bereits vorgegeben sein kann. Etwa, wenn in einem Bereich des abzufliegenden Geländes ein Baumbestand oder die Rohrleitung, die eine Straße unterquert, bekannt sind.

Nach noch einer weiteren Ausführungsform des erfindungsgemäßen Verfahrens wird in dem Schritt, ob messungsrelevante und flugbahnrelevante Störobjekte vorliegen, die Rückreflexion der laserbasierten Methanmessvorrichtung ausgewertet. Hat die Rückreflexion eine zu geringe Intensität oder Energie (bspw. durch dichte Vegetation am Boden), wird nicht die laserbasierte Methanmessvorrichtung zur Methanmessung verwendet, sondern es wird die photoakustische Methanmessvorrichtung verwendet.

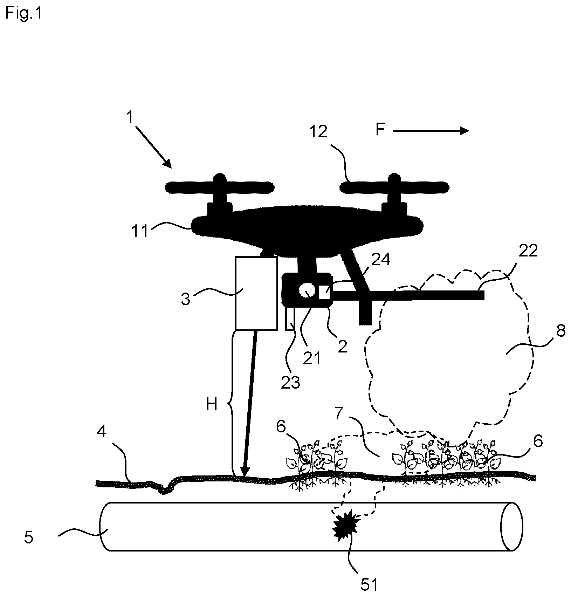

Weitere Ausführungsformen der erfindungsgemäßen Vorrichtung und des Verfahrens sowie einige der Vorteile, die mit diesen und weiteren der jeweiligen Ausführungsformen verbunden sind, werden durch die nachfolgende ausführliche Beschreibung unter Bezug auf die begleitende Figur deutlich und besser verständlich. Die einzige Figur ist lediglich eine schematische Darstellung einer Ausführungsform der Erfindung. Sie zeigt eine schematische Ansicht des erfindungsgemäßen Methanmess-Luftfahrzeugs.

Das Methanmess-Luftfahrzeug 1 ist in der Figur ist als Drohne dargestellt, die ein Gehäuse 11 und eine Vorrichtung zur Steuerung einer Flughöhe 12 aufweist. In dem Gehäuse 11 sind eine ansaugende photoakustische Methanmessvorrichtung 2 und eine laserbasierte Methanmessvorrichtung 3 angeordnet. Die laserbasierte Methanmessvorrichtung 3 umfasst ein Laserspektrometer (figurativ nicht dargestellt). Die Arbeitsweisen der photoakustischen Methanmessvorrichtung 2 sowie der laserbasierten Methanmessvorrichtung 3 sind dem Fachmann bekannt.

Die photoakustische Methanmessvorrichtung 2 weist eine Messzelle 21 mit einer Zuführleitung 22, einer Abführleitung 23 und einer Pumpe 24 auf.

Das in der Figur gezeigte Methanmess-Luftfahrzeug 1 ist befindet sich im Flug entlang einer Flugbahn F und schwebt in einer Flughöhe H über einer Erdoberfläche 4. Auf der Oberfläche gibt es die Vegetation 6. Unterhalb der Erdoberfläche 4 befindet sich in einer nicht näher bestimmten Tiefe eine Erdgasleitung 5, die ein Leck 51 aufweist, aus dem Methan austritt. Der Methanaustritt ist in der Figur durch zwei Methanwolken 7, 8 dargestellt, wobei direkt oberhalb des Lecks 51 an der Erdoberfläche 4 eine erste Methanwolke 7 mit hoher Methankonzentration vorliegt. Darüber, schon etwas verteilt, liegt über der Vegetation 6 eine zweite Methanwolke 8 mit im Vergleich zur ersten Methanwolke 7 geringeren Methankonzentration vor. In der Figur ist die laserbaserbasierte Messvorrichtung 2 aktiv, zu sehen an dem Lichtpfeil Richtung Erdoberfläche 4. Eine Methangasmessung kann alternierend oder gleichzeitig durch die photoakustische Methanmessvorrichtung 2 bzw. die laserbasierte Methanmessvorrichtung 3, erfolgen.

Gemäß einem folgenden Beispiel, das hier ergänzend, aber nicht beschränkend, genannt wird, weist die laserbasierte Methanmessvorrichtung des Methanmess-Luftfahrzeugs ein NIR-Laser-System für die Messung von Methan auf. Dieses kann eine Leistung von 8 mW mit einer Wellenlänge von 1653 nm haben. Oberflächenabhängig kann eine Auflösung in einem Bereich von ca. 0,5 ppm·m bis 1,5 ppm·m, bevorzugt von 1 ppm·m, erreicht werden bei einer Messrate von 16 Hz, so dass bei einer Geschwindigkeit des Luftfahrzeugs von 50 km/h eine Abtastung alle 0,9 m erreicht werden kann. Zu der laserbasierten Methanmessvorrichtung kann mit der photoakustischen Methanmessvorrichtung unabhängig oder ergänzend mit einer Konzentrationsauflösung von < 10 ppb eine gute Abtastung und hohe Messsicherheit erreicht werden (0,9 m Abtastung bei 50 km/h).

Zur Steuerung bzw. zur Datenauswertung verfügt das Methanmess-Luftfahrzeug über eine Datenverarbeitungseinheit. Die Auswertung der Messergebnisse kann vor Ort vorgenommen werden und auch über entsprechende Displays an einem mobilen Bedienteil des Methanmess-Luftfahrzeug angezeigt werden; die ermittelten Daten können aber auch an einen Bestimmungsort übertragen und dort weiter verwertet und bearbeitet werden.

### BEZUGSZEICHENLISTE

- 1: Unbemanntes Methanmess-Luftfahrzeug
- 2: photoakustische Methanmessvorrichtung
- 3: laserbasierte Methanmessvorrichtung
- 4: Erdoberfläche
- 5: Erdgasleitung
- 6: Vegetation
- 7: Methanwolke mit hoher Konzentration
- 8: Methanwolke mit geringer Konzentration

- 11: Gehäuse
- 12: Vorrichtung zur Steuerung einer Flughöhe

- 21: Messzelle
- 22: Zuführleitung
- 23: Abführleitung
- 24: Pumpe

- 51: Leck

- F: Flugbahn
- H: Flughöhe

## Patentansprüche

1. Unbemanntes Methanmess-Luftfahrzeug (1),
ausgebildet zur Messung von Methan aus Quellen im Freien, die unter der Erdoberfläche liegen, wobei das Methanmess-Luftfahrzeug (1)
- zumindest eine ansaugende photoakustische Methanmessvorrichtung (2) und
- zumindest eine laserbasierte Methanmessvorrichtung (3), die ein Laserspektrometer umfasst,
aufweist, die alternierend oder gleichzeitig zur Durchführung von Messungen von Methan betätigbar sind.

2. Methanmess-Luftfahrzeug (1) nach Anspruch 1,
**dadurch gekennzeichnet, dass**
das Methanmess-Luftfahrzeug (1)
- zumindest eine Vorrichtung zur Steuerung einer Flughöhe (11) aufweist, und
- mit einer Vorrichtung zur Bestimmung der Flughöhe und mit einer Vorrichtung zur Bestimmung einer Flugbahn (F) und zur Ermittlung von flugbahnrelevanten und/oder messungsrelevanten Störobjekten operativ gekoppelt ist, und
- ein Kamerasystem und/oder ein Sensorsystem aufweist.

3. Methanmess-Luftfahrzeug (1) nach Anspruch 1 oder 2,
**dadurch gekennzeichnet, dass**
das Methanmess-Luftfahrzeug (1) durch eine fernbedienbare Vorrichtung manuell und/oder autonom betätigbar ist.

4. Methanmess-Luftfahrzeug (1) nach zumindest einem der vorstehenden Ansprüche, **dadurch gekennzeichnet, dass**
die laserbasierte Methanmessvorrichtung (3) ein NIR-Laserspektrometer, ausgebildet zur Ferndetektion von Methangas, aufweist.

5. Methanmess-Luftfahrzeug (1) nach zumindest einem der vorstehenden Ansprüche, **dadurch gekennzeichnet, dass**
die ansaugende photoakustische Methanmessvorrichtung (2) eine Messzelle (21) aufweist, die eine Zuführleitung (22), eine Abführleitung (23) und eine Pumpe (24) aufweist, mit der Methangas aus einer Umgebung des Methanmess-Luftfahrzeugs (1) im Freien in die Messzelle (21) förderbar und abförderbar ist, wobei bevorzugt die Zu- und Abführleitung (22, 23) der photoakustischen Methanmessvorrichtung (2) durch eine gemeinsame Leitung ausgebildet sind.

6. Methanmess-Luftfahrzeug (1) nach Anspruch 5,
**dadurch gekennzeichnet, dass**
ein Probenahmerohr (22), bevorzugt ein schwenkbar an der Messzelle (21) angeordnetes Probenahmerohr (22) die Zuführleitung bildet.

7. Verwendung eines Methanmess-Luftfahrzeugs (1) nach zumindest einem der Ansprüche 1 bis 6 zur Durchführung einer Messung von Methan im Freien aus Quellen, die unter der Erdoberfläche liegen.

8. Verfahren zur Durchführung einer Messung von Methan im Freien aus Quellen, die unter der Erdoberfläche liegen, unter Verwendung eines Methanmess-Luftfahrzeugs (1) nach zumindest einem der Ansprüche 1 bis 7,
**umfassend die Schritte**
in Gang Setzen des Methanmess-Luftfahrzeugs (1) und alternierend oder gleichzeitig Betätigen der photoakustischen Methanmessvorrichtung (2) und der laserbasierten Methanmessvorrichtung (3),
dabei Durchführen von Messungen von Methan.
